# DEMANDE DE BREVET EUROPEEN

(11) **EP 2 009 841 A1**
(43) Date de publication de la demande: **31.12.2008**
(21) Numéro de dépôt: 08305341.3
(22) Date de dépôt: 27.06.2008
(51) Int. Cl.: H04L 12/18, H04L 12/56

(54) **Procédé de filtrage dans un réseau MPLS comprenent une structure P2MP**

(30) Priorité: 29.06.2007 FR 0704721
(71) Demandeur: Alcatel Lucent, 75008 Paris (FR)
(72) Inventeur: Brehon, Yannick, 75014, PARIS (FR); Ciavaglia, Laurent, 92120, MONTROUGE (FR)
(74) Mandataire: Thibaud, Jean-Baptiste

(57) **Abrégé**

L'invention concerne un procédé de filtrage de la communication de paquets MPLS client dans un chemin de commutation d'étiquettes LSP-serveur entre un noeud initiateur (A) et au moins deux noeuds terminateurs (B, D, F, G) d'une structure point-à-multipoint P2MP comprenant également des noeuds de coeur LSR (C, E), ledit procédé prévoyant d'identifier un noeud terminateur (G) - dit non receveur - de la structure qui, n'appartenant pas au chemin LSP-client, n'a pas requis la communication des paquets et de filtrer ladite communication au niveau du dernier noeud-branche LSR (E) qui est commun audit noeud terminateur non receveur et à un noeud terminateur receveur (F) de la structure, ledit filtrage étant prévu pour que le noeud terminateur non receveur (G) ne reçoive pas ladite communication. L'invention concerne également un réseau de communication MPLS comprenant une structure P2MP, ainsi qu'un noeud initiateur et un noeud-branche pour un tel réseau.

## Description

L'invention concerne un procédé de filtrage de la communication de paquets MPLS client dans un chemin de commutation d'étiquettes LSP-serveur entre un noeud initiateur et au moins deux noeuds terminateurs d'une structure point-à-multipoint P2MP, un réseau de communication MPLS comprenant une telle structure P2MP, ainsi qu'un noeud initiateur et un noeud-branche LSR pour un tel réseau.

L'invention s'applique en particulier à un réseau utilisant un protocole MPLS (pour MultiProtocol Label Switching) pour le routage des données, tel que standardisé par l'IETF (pour Internet Engineering Task Force).

De façon principale, un réseau MPLS comprend une pluralité d'éléments de réseau définissant des noeuds LSR (pour Label Switching Router) tels que des commutateurs ou routeurs à commutation d'étiquettes qui sont couplés entre eux.

Préalablement à l'envoi du flux de données entre des noeuds LSR, les chemins LSP sont établis et validés de sorte à envoyer le flux de façon logique dans les chemins LSP.

On appelle noeud initiateur d'un chemin LSP un noeud LSR situé à la source de la connexion et noeud terminateur d'un chemin LSP un noeud LSR situé à la destination de la connexion, des noeuds LSR pouvant être répartis le long du chemin LSP pour permettre la commutation des données le long de la connexion. En général, la plupart des noeuds LSR d'un réseau MPLS sont capables de remplir les fonctions de noeud initiateur et de noeud terminateur pour des chemins LSP, notamment les noeuds périphériques (ou Edge LSR).

Les réseaux MPLS présentent en particulier l'avantage d'une meilleure optimisation du trafic de données (Traffic Engineering en anglais) en permettant notamment un équilibrage de la charge de trafic entre les différents chemins LSP, une réservation de bande passante, une prise en compte des paramètres de qualité de service dans le choix des chemins LSP....

On connaît l'utilisation d'une structure de type point-à-multipoint (P2MP pour Point to MultiPoint) pour un réseau MPLS, ladite structure comprenant un noeud initiateur et plusieurs noeuds terminateurs auxquels un même flux de données doit être communiqué. Ainsi, il est possible d'optimiser la gestion des flux, notamment en prévoyant d'injecter un seul flux dans la structure P2MP et de gérer la réplication du flux au niveau d'un ou plusieurs noeuds-branches, de sorte à ce que chacun des noeuds terminateurs reçoive le flux de données.

Pour limiter le nombre de structures P2MP à gérer dans un réseau MPLS, notamment en cas de multiplexage de plusieurs flux de données, il est souhaitable de pouvoir former plusieurs chemins LSP dits client dans une même structure de chemin LSP P2MP dit serveur.

Toutefois, dans une structure P2MP, tous les noeuds terminateurs reçoivent tous les flux de données, de sorte que les noeuds terminateurs n'appartenant pas à un chemin LSP-client reçoivent un flux non requis provenant de ce chemin LSP-client par l'intermédiaire du LSP-serveur.

Il en résulte donc une consommation inutile de bande passante dans le réseau.

L'invention vise à résoudre les problèmes mentionnés ci-dessus en proposant en particulier un procédé de filtrage de la communication des paquets MPLS client à destination des noeuds terminateurs qui, n'appartenant pas au chemin LSP-client, n'ont pas requis ladite communication. En outre le procédé de filtrage présente l'avantage de ne pas être intrusif pour le réseau, d'être simple et robuste dans sa mise en oeuvre.

A cet effet et selon un premier aspect, l'invention propose un procédé de filtrage de la communication de paquets MPLS client dans un chemin de commutation d'étiquettes LSP-serveur entre un noeud initiateur et au moins deux noeuds terminateurs d'une structure point-à-multipoint P2MP comprenant également des noeuds de coeur LSR, ledit procédé prévoyant d'identifier un noeud terminateur - dit non receveur - de la structure qui, n'appartenant pas au chemin LSP-client, n'a pas requis la communication des paquets et de filtrer ladite communication au niveau du dernier noeud-branche LSR qui est commun audit noeud terminateur non receveur et à un noeud terminateur receveur de la structure, ledit filtrage étant prévu pour que le noeud terminateur non receveur ne reçoive pas ladite communication.

Selon un deuxième aspect, l'invention propose un réseau de communication à commutation d'étiquettes MPLS comprenant une structure point-à-multipoint P2MP entre un noeud initiateur et au moins deux noeuds terminateurs par l'intermédiaire de noeuds de coeur LSR, ledit réseau comprenant un protocole de filtrage de la communication des paquets MPLS client dans un chemin de commutation d'étiquettes LSP de ladite structure, ledit protocole étant apte à identifier un noeud terminateur non receveur n'appartenant pas au chemin LSP-client et à filtrer ladite communication au niveau du dernier noeud-branche LSR qui est commun audit noeud terminateur non receveur et à un noeud terminateur receveur, de sorte à ce que ledit noeud terminateur non receveur ne reçoive pas ladite communication.

Selon un troisième aspect, l'invention propose un noeud initiateur pour un tel réseau de communication, ledit noeud initiateur intégrant un dispositif d'activation du protocole de filtrage en cas d'identification d'un noeud terminateur non receveur, ledit dispositif étant apte à ajuster le champ TTL des paquets MPLS entrant dans le noeud initiateur à une valeur expirant au premier noeud-branche LSR commun au noeud terminateur non receveur et à un noeud terminateur receveur.

Selon un quatrième aspect, l'invention propose un noeud-branche LSR pour un tel réseau de communication, ledit noeud-branche comprenant un dispositif de traitement du champ TTL des paquets MPLS, ledit dispositif étant apte à ajuster ledit champ TTL à une valeur expirant au prochain noeud-branche LSR commun au noeud terminateur non receveur et à un noeud terminateur receveur.

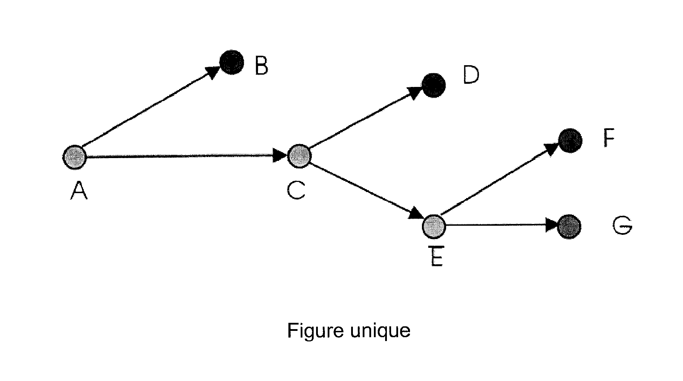

D'autres particularités et avantages de l'invention apparaîtront dans la description qui suit de différents modes de réalisation de l'invention, ladite description étant faite en relation avec la figure annexée représentant de façon schématique une structure P2MP d'un réseau MPLS comprenant un chemin LSP-serveur dans lequel un chemin LSP-client est imbriqué.

En relation avec la figure, on décrit ci-dessous un réseau de communication à commutation d'étiquettes utilisant un protocole MPLS pour le routage des données, ledit réseau comprenant une structure P2MP entre un noeud initiateur A et quatre noeuds terminateurs B, D, F, G par l'intermédiaire de deux noeuds de coeur LSR C, E. Cette structure P2MP est définie par un chemin LSP-serveur P2MP.

De façon classique, le chemin LSP-serveur est défini par une étiquette incluse dans le paquet MPLS qui comprend en outre notamment l'adresse IP et les données à communiquer. Ainsi, chaque noeud, sur la base d'une table d'étiquettes, peut commuter une étiquette entrante par une étiquette sortante pour le routage du paquet à destination du noeud suivant sur le chemin LSP-serveur. Enfin, au niveau du noeud terminateur, l'étiquette peut être supprimée pour retrouver le paquet de données initial afin qu'il puisse être traité par un autre protocole ou continuer à être routé dans un réseau IP.

Dans cette structure, on définit également un chemin de commutation d'étiquettes LSP-client entre le noeud initiateur A et les noeuds terminateurs B, D, F qui sont receveurs des paquets MPLS client communiqués par ce chemin. Le chemin LSP-client est imbriqué dans le chemin LSP-serveur, et le paquet MPLS comprend alors, sous l'étiquette du chemin LSP-serveur, une étiquette relative au chemin LSP-client.

Le réseau comprend en outre un protocole de filtrage de la communication des paquets MPLS dans le chemin à commutation d'étiquettes LSP-serveur. Le protocole est apte à identifier le noeud terminateur - dit non receveur - (le noeud G sur la figure) qui, appartenant à la structure P2MP mais n'appartenant pas au chemin LSP-client, n'a pas requis la communication des paquets MPLS. Bien entendu, le mode de réalisation représenté n'est qu'illustratif, en particulier, plusieurs noeuds terminateurs non receveur peuvent bénéficier du filtrage selon l'invention.

Selon une réalisation, l'identification du noeud terminateur non receveur G est réalisée après réception d'un paquet MPLS non requis par le noeud terminateur G, puis envoi d'un message d'identification au noeud initiateur A par ledit noeud terminateur.

Selon une autre réalisation, l'identification du noeud terminateur non receveur G est réalisée par comparaison entre les noeuds terminateurs B, D, F du chemin LSP-client et les noeuds terminateurs B, D, F, G de la structure P2MP.

Après identification du noeud terminateur non receveur G, le protocole est apte à filtrer la communication des paquets MPLS au niveau du dernier noeud-branche LSR E qui est commun audit noeud terminateur non receveur et à un noeud terminateur receveur F, ledit filtrage étant prévu pour que le noeud terminateur non receveur G ne reçoive pas ladite communication.

Dans un mode de réalisation le filtrage est réalisé en utilisant le champ TTL (pour Time To Live en anglais) des paquets MPLS. Le champ TTL est inclus en standard dans les paquets MPLS pour déterminer le nombre de sauts du paquet avant sa destruction. Ainsi, en décrémentant le champ TTL à chaque saut entre les noeuds, il est possible d'éviter un éventuel bouclage de la communication du paquet dans le réseau.

Dans ce mode de réalisation, après identification du noeud terminateur non receveur G par le noeud initiateur A, ledit noeud initiateur ajuste le champ TTL des paquets MPLS entrant du chemin LSP-client à une valeur expirant au premier noeud-branche LSR C commun au noeud terminateur non receveur G et aux noeuds terminateurs receveur D, F. On dira qu'un noeud branche LSR est commun à des noeuds terminateurs, pour un LSP, lorsque le LSP P2MP relie le noeud branche aux noeuds terminateurs, indépendamment de la présence ou de l'absence d'un ou plusieurs LSR intermédiaires entre ledit noeud branche et les divers noeuds terminateurs. Ceci permet d'assurer la propagation d'une valeur correcte du champ TTL sur les branches ayant toutes des noeuds récepteurs. Sur la figure, le noeud initiateur A met la valeur 1 dans le champ TTL pour que cette valeur soit à 0 dans le noeud-branche LSR C.

Par ailleurs, les paquets MPLS avec une valeur normale du champ TTL sont communiqués au premier noeud receveur B qui ne présente pas de noeud-branche LSR commun avec le noeud terminateur non receveur G.

Pour ce faire, le noeud initiateur A peut intégrer un dispositif d'activation du protocole de filtrage en cas d'identification du noeud terminateur non receveur G, ledit dispositif étant apte à ajuster le champ TTL à la valeur requise.

Ensuite, le protocole de filtrage prévoit d'ajuster de façon itérative le champ TTL dans les noeuds-branche LSR communs à une valeur expirant au prochain noeud-branche LSR commun au noeud terminateur non receveur G et à un noeud terminateur receveur. Sur la figure, le noeud LSR C met une valeur normale dans le champ TTL pour permettre la communication au noeud terminateur D et à la valeur 1 pour la communication au noeud-branche LSR commun E qui est juste adjacent.

Pour ce faire, les noeuds LSR C, E peuvent comprendre un dispositif de traitement du champ TTL des paquets MPLS, ledit dispositif étant apte à ajuster le champ TTL à la valeur requise.

Le filtrage est réalisé dans le dernier noeud-branche commun E en conservant la valeur du champ TTL expirée (c'est-à-dire la valeur 0) pour la liaison avec le noeud terminateur non receveur G et, pour la liaison avec le noeud terminateur receveur F, en ajustant le champ TTL à une valeur permettant la communication (par exemple à une valeur normale). En particulier, le filtrage peut être réalisé par le dispositif de traitement du noeud-branche LSR E.

Selon une réalisation, après identification du noeud terminateur non receveur G, le noeud initiateur A envoi un message d'activation de l'ajustement aux dispositifs de traitement des noeuds-branche LSR communs C, E, et un message de filtrage au dispositif de traitement du dernier noeud-branche commun E. Ainsi, on peut éviter un risque d'erreur relativement à l'utilisation d'un flux non requis par un noeud terminateur.

En outre, toujours après identification du noeud terminateur non receveur G, le noeud initiateur peut ajuster le champ EXP inclus en standard dans les paquets MPLS, à une valeur identifiant la mise en oeuvre du procédé de filtrage.

## Revendications

1. Procédé de filtrage de la communication de paquets MPLS client dans un chemin de commutation d'étiquettes LSP-serveur entre un noeud initiateur (A) et au moins deux noeuds terminateurs (B, D, F, G) d'une structure point-à-multipoints P2MP comprenant également des noeuds de coeur LSR (C, E) , ledit procédé prévoyant d'identifier un noeud terminateur (G) - dit non receveur - de la structure qui, n'appartenant pas au chemin LSP-client, n'a pas requis la communication des paquets et de filtrer ladite communication au niveau du dernier noeud-branche LSR (E) qui est commun audit noeud terminateur non receveur et à un noeud terminateur receveur (F) de la structure, ledit filtrage étant prévu pour que le noeud terminateur non receveur (G) ne reçoive pas ladite communication.

2. Procédé de filtrage selon la revendication 1, dans lequel, après identification du noeud terminateur non receveur (G) par le noeud initiateur (A), ledit procédé prévoit :
- d'ajuster le champ TTL des paquets MPLS entrant dans ledit noeud initiateur à une valeur expirant au premier noeud-branche LSR (C) commun au noeud terminateur non receveur (G) et à un noeud terminateur receveur (D, F) ; puis
- d'ajuster de façon itérative ledit champ TTL dans les noeuds-branche LSR communs (C) à une valeur expirant au prochain noeud-branche LSR (E) commun au noeud terminateur non receveur (G) et à un noeud terminateur receveur (F) ;
le filtrage étant réalisé dans le dernier noeud-branche commun (E), en conservant la valeur du champ TTL expirée pour la liaison avec le noeud terminateur non receveur (G) et, pour la liaison avec le noeud terminateur receveur (F), en ajustant le champ TTL à une valeur permettant la communication.

3. Procédé de filtrage selon la revendication 2, dans lequel, après identification du noeud terminateur non receveur (G), le noeud initiateur (A) envoi un message d'activation de l'ajustement aux noeuds-branche communs (C, E) et un message de filtrage au dernier noeud-branche commun (E).

4. Procédé de filtrage selon la revendication 2 ou 3, dans lequel, après identification du noeud terminateur non receveur (G), le noeud initiateur (A) ajuste le champ EXP des paquets MPLS à une valeur identifiant la mise en oeuvre dudit procédé.

5. Procédé de filtrage selon l'une quelconque des revendications 1 à 4, dans lequel l'identification du noeud terminateur non receveur (G) est réalisée après réception d'un paquet MPLS non requis par ledit noeud terminateur, puis envoi d'un message d'identification au noeud initiateur (A) par ledit noeud terminateur.

6. Procédé de filtrage selon l'une quelconque des revendications 1 à 4, dans lequel l'identification du noeud terminateur non receveur (G) est réalisée par comparaison entre les noeuds terminateurs (B, D, F) du chemin LSP-client et les noeuds terminateurs (B, D, F, G) de la structure P2MP.

7. Réseau de communication à commutation d'étiquettes MPLS comprenant une structure point-à-multipoints P2MP entre un noeud initiateur (A) et au moins deux noeuds terminateurs (B, D, F, G) par l'intermédiaire de noeuds de coeur LSR (C, E), ledit réseau étant apte à utiliser un protocole de filtrage de la communication des paquets MPLS client dans un chemin de commutation d'étiquettes LSP-serveur de ladite structure, ledit protocole étant apte à identifier un noeud terminateur non receveur (G) n'appartenant pas au chemin LSP-client et à filtrer ladite communication au niveau du dernier noeud-branche LSR (E) qui est commun audit noeud terminateur non receveur et à un noeud terminateur receveur (F), de sorte à ce que ledit noeud terminateur non receveur ne reçoive pas ladite communication.

8. Noeud initiateur (A) pour un réseau de communication selon la revendication 7, ledit noeud initiateur intégrant un dispositif d'activation du protocole de filtrage en cas d'identification d'un noeud terminateur non receveur (G), ledit dispositif étant apte à ajuster le champ TTL des paquets MPLS entrant dans le noeud initiateur (A) à une valeur expirant au premier noeud-branche LSR (C) commun au noeud terminateur non receveur (G) et à un noeud terminateur receveur (D, F).

9. Noeud-branche LSR (C) pour un réseau de communication selon la revendication 7, ledit noeud-branche comprenant un dispositif de traitement du champ TTL des paquets MPLS, ledit dispositif étant apte à ajuster ledit champ TTL à une valeur expirant au prochain noeud-branche LSR commun (E) au noeud terminateur non receveur (G) et à un noeud terminateur receveur (F).

10. Noeud-branche LSR (E) selon la revendication 9, dans lequel le dispositif de traitement est également apte à réaliser le filtrage en conservant la valeur du champ TTL expirée pour la liaison directe avec le noeud terminateur non receveur (G) et, pour la liaison directe avec le noeud terminateur receveur (F), à ajuster le champ TTL à une valeur permettant la communication.
